# EUROPEAN PATENT APPLICATION

(11) **EP 3 184 398 A1**
(43) Date of publication of application: **28.06.2017**
(21) Application number: 15202197.8
(22) Date of filing: 22.12.2015
(51) Int. Cl.: B61L 15/00, G09F 9/35

(54) **WIRELESS SEAT RESERVATION DISPLAY APPARATUS**

(71) Applicant: Televic Rail NV, 8870 Izegem (BE)
(72) Inventor: VAN DEN WOUWER, Dirk, B-9120 Melsele (BE)
(74) Representative: Beck, Michaël Andries T.

(57) **Abstract**

The invention pertains to a display apparatus comprising attachment means for attaching said display apparatus to a window of a passenger vehicle; first light energy conversion means (710a), arranged to convert, when in use, daylight into a first amount of electrical energy; second light energy conversion means (710b), arranged to convert, when in use, ambient light inside said passenger vehicle into a second amount of electrical energy; an energy storage (720) operatively connected to said first light energy conversion means and said second light energy conversion means to store at least part of said first amount of electrical energy and at least part of said second amount of electrical energy; a wireless communication interface (760; 795; 770) for receiving information to be displayed; and display means (740; 750) for displaying at least part of said received information; and an activation controller (730) arranged to draw energy from said energy storage (720) and responsive to a wirelessly transmitted activation signal; wherein said communication interface (760; 795; 770) and said display means (740; 750) are arranged to draw energy from said energy storage (720) and to be activated and deactivated under the control of said activation controller (730).

## Description

### Field of the Invention

The present invention pertains to a seat reservation status display, as is typically used in passenger vehicles such as trains, to give passengers boarding the vehicle up to date information as to whether a given seat is reserved or available.

### Background

Taiwanese utility model publication TW M504295 U discloses a train seat reservation information system for displaying the seat availability in the regional rail and high speed rail trains. The seat availability information would be announced by 1) a small LCD monitor above each seat; and searchable via 2) apps of handheld devices (e.g. smartphone, tablet). This allows the no-seat ticket holders on the trains to find an available seat via the seat availability information provided by the system. If a passenger with a reserved seat gets off the train before the destination of his/her journey, the seat would be announced "available" afterwards by LCD monitor or mobile apps. Even if the seat is reserved respectively by more than one person in different segments within the whole train journey, the system would display which segments are reserved. Also, if a person who reserved a seat is no-show for 15 minutes after the train leaves the person's station of origin, the weight detection device beneath the seat allows the system to recognize the person no-show and announces the seat "available".

German utility model publication DE 29716850 U1 discloses an indicator for effecting seat reservations in a rail vehicle, with a separately changeable indicator field for each respective seat, characterized in that each indicator field is provided as a separately driven LED- or LCD-unit, a number of which are connected to a wireless modem over a wired bus. The wireless modem provides a connection to a central computer.

European patent application publication no. EP 2821310 A1 relates to an arrangement of a display device for an electronic seat reservation display to display a reservation state of at least one passenger seat of a passenger seating unit in a vehicle, in particular a rail vehicle, wherein in an interior of the vehicle, an aisle and a plurality of passenger seat units are provided, the passenger seats of which are aligned parallel to the longitudinal direction of the aisle. It is contemplated that the display device is attached to that side of the passenger seat of a passenger seating unit, which faces the aisle; it may in particular be attached to the side of the headrest, which faces the aisle. The application further relates to a corresponding passenger seating unit having display means, and a corresponding vehicle.

It is a disadvantage of the known seat reservation systems that they require the presence of adequate cabling in the vehicle to power the electronic displays and/or to distribute the seat reservation status information. These systems are not suitable for retrofitting existing vehicles.

### Summary

According to the invention, there is provided a display apparatus comprising attachment means for attaching the display apparatus to a window of a passenger vehicle; first light energy conversion means, arranged to convert, when in use, daylight into a first amount of electrical energy; second light energy conversion means, arranged to convert, when in use, ambient light inside the passenger vehicle into a second amount of electrical energy; an energy storage operatively connected to the first light energy conversion means and the second light energy conversion means to store at least part of the first amount of electrical energy and at least part of the second amount of electrical energy; a wireless communication interface for receiving information to be displayed; and display means for displaying at least part of the received information; and an activation controller arranged to draw energy from the energy storage and responsive to a wirelessly transmitted activation signal; wherein the communication interface and the display means are arranged to draw energy from the energy storage and to be activated and deactivated under the control of the activation controller.

It is an advantage of the display apparatus according to the present invention, that it operates completely without wires, as it is autonomously powered by light energy conversion means and receives seat reservation information via a wireless communication interface. This allows convenient installation of the apparatus in existing vehicles (e.g., in refurbishment projects), without the need to provide new cabling. Autonomous operation is made possible by providing a wake-up mechanism, which ensures a maximal preservation of the locally stored energy.

The invention is based *inter alia* on the insight of the inventors that seat reservation information is only relevant in the time periods immediately following the opening of the doors at a station, when new passengers enter the vehicle and start looking for an available seat. The invention is further based on the insight of the inventors that seat reservation status only changes at stations where passengers get on or off the vehicle. The inventors have thus invented a system in which the seat reservation displays are only activated in these relevant periods of time, thus requiring only a fraction of the amount of energy of prior art systems.

In an embodiment, the display apparatus according to the present invention comprises a two-dimensional display.

The two-dimensional display of the display means may comprise an LCD display, an electrophoretic display (known as e-ink), one or more LEDs or other luminescent elements (e.g., forming multiple segments that can form alphanumerical symbols by activating the segments in specific combinations), etc.

It is a particular advantage of electrophoretic displays that the displayed content remains visible even when the display is not powered. Hence, this kind of display only requires power when the content to be visualized changes.

In an embodiment, the display apparatus according to the present invention comprises an occupancy indicator.

An occupancy indicator provides an immediate visual clue to passengers as to whether a particular seat is taken, without requiring the passengers to read the content of a display.

In an embodiment of the display apparatus according to the present invention, the wireless communication interface is configured to receive the information from a server.

In this embodiment, the server broadcasts the relevant information to all the display apparatus within its range; this solution requires an addressing scheme that allows individual display apparatus to recognize the data that is addressed to them.

In an embodiment of the display apparatus according to the present invention, the wireless communication interface is configured to receive said information from a like display apparatus, and wherein said wireless communication interface is further configured to pass on received data to a like display apparatus.

In this embodiment, a lower receiver sensitivity suffices, as the display apparatus communicate with each other in a daisy-chained fashion.

According to an aspect of the present invention, there is provided a passenger vehicle comprising a plurality of passenger seats, a reservation information transmitter, and a plurality of display apparatus according to any of the preceding claims, wherein the plurality of display apparatus are arranged in the proximity of respective ones of the plurality of passenger seats, so as to convey information about a reservation status of the respective ones of the plurality of passenger seats in response to information received from the reservation information transmitter.

### Brief Description of the Figures

These and other features and advantages of embodiments of the present invention will now be described in more detail with reference to the attached drawings, in which:
Figure 1 schematically illustrates the architecture of a generic, state-of-the-art, electronic train seat reservation system; and
Figure 2 schematically illustrates an apparatus according to an embodiment of the present invention.

### Description of Embodiments

On many train trajectories, especially on long distance routes, travelers can reserve particular seats before boarding the train. On the date of travelling, the reservation of that seat will be indicated visually. Traditionally, crew members attach a paper to the seat indicating that the seat has been reserved. This is a time consuming and error prone method.

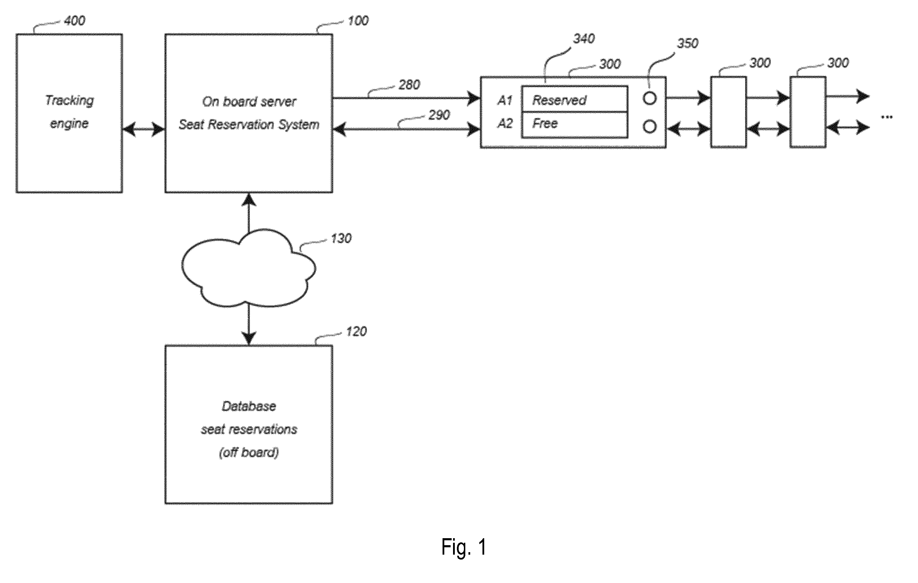

Figure 1 schematically illustrates the architecture of a generic, state-of-the-art, electronic train seat reservation system. Data is handled on the wayside by a database component **120**. Train and journey specific data is transferred to the correct vehicle (being a single car, compartment, or train) by means of a communication channel **130**. In some cases, this transfer is handled by a wireless communication system (e.g. Wi-Fi or LTE). In other cases, the transfer is done manually by copying the required data to the on board Seat Reservation Server **100** by means of a portable storage device (e.g., a memory stick).

The on-board Seat Reservation Server is connected to displays **300** in the passenger area. The latter are referred to as Seat Reservation Displays (SRD). These displays can contain an occupancy indicator **350** to communicate to travelers if the seat is available or occupied (reserved). In some cases this indicator is based on a traffic light system: "red" means occupied; "green" means available, and "amber" means that the seat is reserved for only a part of the journey.

A display **340** can visualize additional information, such as current seat status (reserved, occupied), the name of the person who reserved the seat, the station at which the status of the seat will change, etc.

The on-board Seat Reservation Server **100** powers the daisy-chained displays by means of cabling **280**. In addition, a communication channel **290** is foreseen to feed the displays with the appropriate data. This channel is also used for other purposes. Examples are diagnostics, network topology discovery, and so forth.

It is clear that adding a complete electronic seat reservation system in a refurbishment overhaul is expensive. This is due to the mechanical integration in the passenger area, and the wiring to power the new displays and to set up a communication between displays and the on board server **100**.

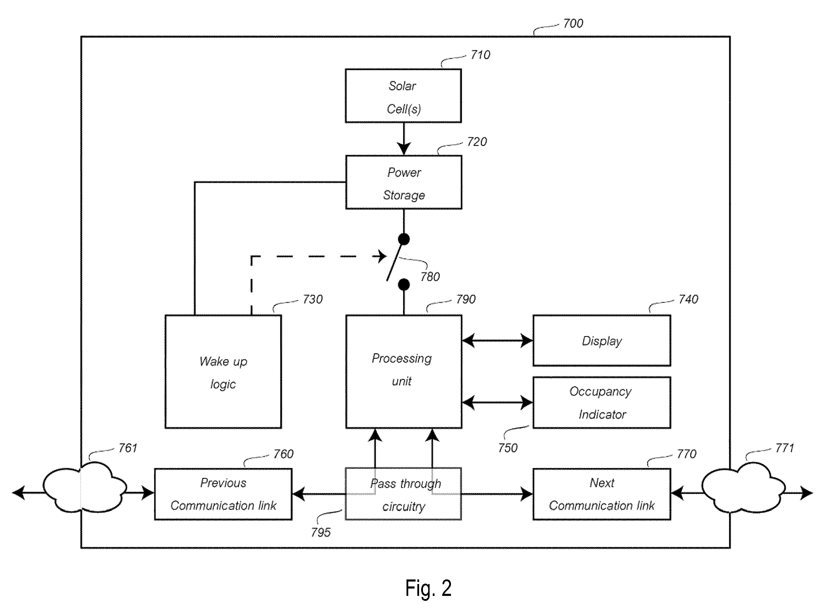

An embodiment of an apparatus according to the present invention, which overcomes these disadvantages, will now be described with reference to Figure 2. The display apparatus comprises attachment means (not shown) for attaching the display apparatus to a window of a passenger vehicle, such as a train or a coach. A possible attachment means is two-sided adhesive tape, in particular high-strength bonding tape such as the 3M™ VHB™ tape available from the 3M Company of Maplewood, Minnesota. Other attachment means include pressure-sensitive glues, suction caps, and the like.

By placing it on a window, the display apparatus is optimally positioned to capture daylight for conversion into electricity. To this end, the apparatus includes first light energy conversion means **710a,** arranged to convert, when in use, daylight that falls onto the window into a first amount of electrical energy. The first light energy conversion means **710a** may be a photovoltaic cell (solar cell). The display apparatus further includes second light energy conversion means **710b**, arranged to convert, when in use, ambient light inside the passenger vehicle into a second amount of electrical energy. The ambient light may consist of reflected daylight and/or artificial light produced by the lighting fixtures inside the vehicle. In this way, the display apparatus can convert light to electricity by day and by night. An energy storage **720** such as a capacitor or a battery is operatively connected to the first light energy conversion means **710a** and the second light energy conversion means **710b** to store at least part of the first amount of electrical energy and at least part of the second amount of electrical energy, so as to ensure a sufficient provision of electrical power when the light impinging on the light energy conversion means **710a, 710b** fluctuates and to increase the autonomy of the display apparatus.

A wireless communication interface **760**; **795**; **770** is provided for receiving information to be displayed, in particular the current seat status (reserved, occupied), the name of the person who reserved the seat, the station at which the status of the seat will change, etc. This information or part thereof may be displayed by means of display means **740**; **750**, which may comprise an LCD display, an electrophoretic display (known as e-ink), one or more LEDs, etc.

The functions of the display apparatus may be controlled by a processing unit **790**. The processing unit **790** may be responsible for setting up and maintaining 'previous communication link' logic **760**. This component will establish and maintain the wireless link to the server **100** (direct link architecture) or to the display apparatus located on the side closest to the on board server **100** (daisy chain architecture). This component **720** may use any suitable wireless communication technology, including radiofrequency communications (e.g. wireless PAN technology such as Bluetooth) or optical communications (preferably outside the visible light spectrum, e.g. using infrared radiation) to communicate to the adjacent display apparatus, receiving and transmitting commands, but also receiving content to be visualized by its own display means **740**; **750**. In addition, the component **720** can also receive content meant for like display apparatus further in the chain, in the case of a daisy-chained deployment. This data (e.g. topology discovery data) is repeated and forwarded by the processing unit or by optional pass-through circuitry **795**, which can ensure the integrity of the chain in the case of an equipment failure.

Secondly, the processing unit **790** interprets and renders information which needs to be visualized on its own display means, including two-dimensional display **740** and/or the occupancy indicator(s) **750** as the case may be.

To further enhance the autonomy of the display apparatus, it is provided with an activation controller **730**, responsive to a wirelessly transmitted activation signal, such that the communication interface **760**; **795**; **770** and the display means **740**; **750** are activated and deactivated under the control of the activation controller **730**.

As the activation controller **730**, the communication interface **760**; **795**; **770** and the display means **740**; **750** are all arranged to draw energy from the energy storage **720**, and thus indirectly from the light energy conversion means **710a, 710b**, the selective activation contributes to limiting the total energy consumption and thus increasing the autonomy of the display apparatus. The selective activation mechanism will be described with reference to two modes, designated as "passive mode" and "active mode".

In passive mode, the power switch **780** is opened, and components are not powered, except for the activation controller **730.** This component is actively listening to a wireless wake-up signal. As soon as a wake-up signal is transmitted by the on-board server **100** and correctly received and interpreted by the activation controller **730**, the display apparatus enters active mode. The power switch **780** is closed and all components are powered by the energy storage **720**.

When all display apparatus in the vehicle are in the active mode, the respective wireless communication means **760**, **770** may be configured to form a daisy chain. Alternatively, each of the display apparatus receives the relevant information directly from the server **100**. The operation of the display apparatus may be staged: in a first phase, they exchange the topology of the network and the relevant data between the devices and the on-board server **100**; in a second phase, the displays **740** and/or occupancy indicators **750** are updated.

Maintaining active mode may be made conditional on receiving repeated "keep-alive" signals from the server **100**. In this case, the activation controller **730** effects a switch back to passive mode when the associated time-out expires without receiving another such signal. Alternatively, the server **100** may be configured to send a specific "go to sleep" signal to the display apparatus; in that case, the activation controller **730** must be configured accordingly to effect a switch back to passive mode when the "go to sleep" signal is received.

Regardless of the switching scheme, the on-board server **100** can be programmed to switch the chain of display apparatus between active and passive mode at the appropriate times. In one embodiment, the on-board server **100** gets a trigger from the tracking engine **400** when a station on the route is being approached. Such a tracking engine **400** holds the data of the specific journey the train is travelling, and knows the position of the train at any given time (e.g., by means of GPS information, wheel pulses, or other means). The display apparatus can be switched into passive mode when the train leaves the station, or after a predetermined latency (e.g. after 4 minutes). If the display is based on electrophoretic technology (e-ink), the content of the displays remains visible while the display apparatus is in passive mode, and remains unchanged until the next station is approached.

The processing unit **790** may be implemented in dedicated hardware (e.g., ASIC), configurable hardware (e.g., FPGA), programmable components (e.g., a low-power DSP or general purpose processor with appropriate software), or any combination thereof. The same component(s) may also include other functions, such as the activation controller **730**.

While the invention has been described hereinabove with reference to specific embodiments, this was done to clarify and not to limit the invention. The skilled person will appreciate that various modifications and different combinations of disclosed features are possible without departing from the scope of the invention.

## Claims

1. A display apparatus comprising
- attachment means for attaching said display apparatus to a window of a passenger vehicle;
- first light energy conversion means (710a), arranged to convert, when in use, daylight into a first amount of electrical energy;
- second light energy conversion means (710b), arranged to convert, when in use, ambient light inside said passenger vehicle into a second amount of electrical energy;
- an energy storage (720) operatively connected to said first light energy conversion means and said second light energy conversion means to store at least part of said first amount of electrical energy and at least part of said second amount of electrical energy;
- a wireless communication interface (760; 795; 770) for receiving information to be displayed; and
- display means (740; 750) for displaying at least part of said received information;
- and an activation controller (730) arranged to draw energy from said energy storage (720) and responsive to a wirelessly transmitted activation signal;
wherein said communication interface (760; 795; 770) and said display means (740; 750) are arranged to draw energy from said energy storage (720) and to be activated and deactivated under the control of said activation controller (730).

2. The display apparatus according to claim 1, wherein said display means comprises a two-dimensional display (740).

3. The display apparatus according to claim 1 or claim 2, wherein said display means comprises an occupancy indicator (750).

4. The display apparatus according to any of the preceding claims, wherein said wireless communication interface (760) is configured to receive said information from a server.

5. The display apparatus according to any of the preceding claims, wherein said wireless communication interface (760) is configured to receive said information from a like display apparatus, and wherein said wireless communication interface (760) is further configured to pass on received data to a like display apparatus.

6. A passenger vehicle comprising a plurality of passenger seats, a reservation information transmitter, and a plurality of display apparatus according to any of the preceding claims, wherein said plurality of display apparatus are arranged in the proximity of respective ones of said plurality of passenger seats, so as to convey information about a reservation status of said respective ones of said plurality of passenger seats in response to information received from said reservation information transmitter.
